# FASCICULE DE BREVET EUROPEEN

(11) **EP 3 478 473 B1**
(45) Date de publication et mention de la délivrance du brevet: **28.07.2021**
(21) Numéro de dépôt: 17742478.5
(22) Date de dépôt: 20.06.2017
(51) Int. Cl.: B29C 45/44, B29C 45/26

(54) **PROCÉDÉ ET OUTILLAGE ASSOCIÉ POUR LA FABRICATION PAR INJECTION D'UN MANCHON**
VERFAHREN UND ZUGEHÖRIGES WERKZEUG ZUR HERSTELLUNG EINER HÜLSE DURCH SPRITZGIESSEN
METHOD AND ASSOCIATED TOOLING FOR THE MANUFACTURE OF A SLEEVE BY INJECTION MOULDING

(30) Priorité: 30.06.2016 FR 1656184
(43) Date de publication de la demande: 08.05.2019
(73) Titulaire: Renzo, Bernard, 53000 Laval (FR)
(72) Inventeur: Renzo, Bernard, 53000 Laval (FR)
(74) Mandataire: Ipsilon
(86) Numéro de dépôt international: PCT/FR2017/051611
(87) Numéro de publication internationale: WO 2018/002476

(56) Documents cités:
- WO-A1-2006/048433
- WO-A1-2016/079685
- DE-A1- 3 616 963
- DE-A1-102013 218 711
- JP-A- H1 073 162
- US-A1- 2012 088 642
- US-A1- 2014 145 372

## Description

### DOMAINE DE L'INVENTION

L'invention concerne un procédé et l'outillage associé pour la fabrication par injection d'un manchon.

Elle concerne plus particulièrement un procédé pour la fabrication par injection d'un manchon encore appelé soufflet hélicoïdal comprenant un corps creux moulé cylindrique ou cylindro-conique comportant au moins une partie à soufflet déformable disposée dans le prolongement d'une base formant une extrémité du manchon, à l'aide d'un outillage comprenant un moule en au moins deux parties délimitant une cavité de moulage apte à passer d'une position ouverte à une position fermée et inversement par déplacement relatif desdites parties de moule, et un noyau insérable au moins partiellement à l'intérieur de la cavité de moulage et comprenant une partie, dite première partie, cylindrique ou cylindro-conique, munie extérieurement d'un filetage hélicoïdal complémentaire d'un filetage hélicoïdal du moule pour former, entre lesdites filetages hélicoïdaux, à l'état fermé de ladite cavité de moulage, un premier espace de moulage de la partie à soufflet du manchon.

### ART ANTÉRIEUR

Les manchons à soufflet à spires radiales, c'est-à-dire dont l'enveloppe cylindrique ou cylindro-conique du soufflet est délimitée par une paroi ondulée dont les plans des ondes s'étendent sensiblement dans une direction radiale par rapport à l'axe longitudinal de l'enveloppe, notamment les soufflets de transmission ou de direction, sont bien connus à ceux versés dans cet art.

Ces manchons à soufflet ont été réalisés pendant longtemps en caoutchouc, avant d'être fabriqués à l'aide de matière thermoplastique par injection soufflage.

Cette technique ne donnant pas entière satisfaction, un procédé de fabrication de ces manchons à soufflet par injection dans un moule fermé a été développé, comme l'illustre le brevet FR 2 848 497. Ce procédé nécessite le dévissage relatif du noyau et du manchon à soufflet empêchant la fabrication de manchon à base de forme complexe, en particulier polylobée.

Enfin, ce procédé génère des frottements importants entre certaines parties du manchon et le noyau, au risque d'endommager ledit manchon. Ces mêmes inconvénients sont présents dans la demande internationale WO 2006/048433.

Un procédé pour la fabrication d'un manchon est également décrit dans la demande WO 2006/048433 et dans la demande US 2014/145372. Dans le document américain, le soufflet obtenu n'est pas un soufflet hélicoïdal. Le document WO 2016/079685 décrit un manchon sans base.

### BUTS ET RÉSUMÉ

Un but de l'invention est donc de proposer un procédé du type précité, dont la mise en oeuvre permet la réalisation d'un manchon à base de forme complexe, en particulier polylobée.

Un autre but de l'invention est de proposer un manchon dont la résistance mécanique est améliorée.

À cet effet, l'invention a pour objet un procédé pour la fabrication par injection d'un manchon, encore appelé soufflet hélicoïdal, comprenant un corps creux moulé, cylindrique ou cylindro-conique, comportant au moins une partie à soufflet déformable disposée dans le prolongement d'une base formant une extrémité du manchon, à l'aide d'un outillage comprenant un moule en au moins deux parties délimitant une cavité de moulage apte à passer d'une position ouverte à une position fermée, et inversement, par déplacement relatif desdites parties de moule, et un noyau, insérable au moins partiellement à l'intérieur de la cavité de moulage, et comprenant une partie, dite première partie, cylindrique ou cylindro-conique munie extérieurement d'un filetage hélicoïdal complémentaire d'un filetage hélicoïdal du moule pour former entre lesdits filetages hélicoïdaux, à l'état fermé de ladite cavité de moulage, un premier espace de moulage de la partie à soufflet du manchon, caractérisé en ce que le noyau comprenant en sus de la première partie cylindrique ou cylindro-conique munie extérieurement d'un filetage hélicoïdal, une deuxième partie dite mobile complémentaire d'une partie en creux du moule pour former entre ladite deuxième partie du noyau et la partie en creux du moule, à l'état fermé de ladite cavité de moulage, un deuxième espace de moulage de la base du manchon, ledit procédé comprend, à l'état inséré de manière au moins partielle du noyau dans la cavité de moulage et fermé de la cavité de moulage, une étape de remplissage par injection de matière des premier et deuxième espaces de moulage laissés libres entre le noyau et l'intérieur de la cavité de moulage, une étape d'ouverture du moule au cours, ou à l'issue de laquelle, la deuxième partie du noyau est déplacée axialement suivant une direction parallèle à l'axe d'enroulement des filets du filetage hélicoïdal de la première partie du noyau, dans le sens d'un écartement de la première partie du noyau, et une étape d'entraînement en déplacement relatif en rotation du manchon et de la première partie du noyau en vue d'un démoulage par dévissage du manchon.

La conception en plusieurs parties séparables du noyau permet la réalisation d'un manchon de forme complexe.

Selon un mode de mise en œuvre du procédé, ledit procédé comprend, avant l'étape d'entraînement en déplacement relatif en rotation du manchon et de la première partie du noyau en vue d'un démoulage par dévissage du manchon, une étape d'injection d'un fluide sous pression entre la première partie du noyau et le manchon. Le fluide sous pression, tel que de l'air, permet de faciliter le démoulage de la partie à soufflet du manchon.

Selon un mode de mise en œuvre du procédé, ledit procédé comprend, à l'état inséré du noyau dans la cavité de moulage, une étape de fermeture de la cavité de moulage au cours de laquelle la deuxième partie du noyau est déplacée axialement suivant une direction parallèle à l'axe d'enroulement des filets du filetage hélicoïdal de la première partie du noyau, dans le sens d'un rapprochement de la première partie du noyau.

De préférence, le déplacement de la deuxième poutre du noyau s'opère en synchronisme de l'étape de fermeture de la cavité de moulage. Ceci permet de réduire les temps de cycle.

L'invention a encore pour objet un outillage pour la fabrication par injection d'un manchon, encore appelé soufflet hélicoïdal, comprenant un corps creux moulé, cylindrique ou cylindro-conique, comportant une partie à soufflet déformable disposée dans le prolongement d'une base formant une extrémité du manchon, ledit outillage comprenant un moule en au moins deux parties délimitant une cavité de moulage apte à passer d'une position ouverte à une position fermée, et inversement, par déplacement relatif desdites parties de moule, et un noyau insérable au moins partiellement à l'intérieur de la cavité de moulage, ledit manchon étant formé par remplissage, à l'aide d'une matière de remplissage, de l'espace laissé libre entre le noyau et l'intérieur de la cavité de moulage, caractérisé en ce que le noyau est en au moins deux parties séparables et comprend une partie dite première partie cylindrique ou cylindro-conique munie extérieurement d'un filetage hélicoïdal complémentaire d'un filetage hélicoïdal du moule pour former entre lesdits filetages hélicoïdaux, à l'état inséré de manière au moins partielle du noyau dans la cavité de moulage et fermé de la cavité de moulage, un premier espace de moulage de la partie à soufflet à spires hélicoïdales du manchon, et une deuxième partie complémentaire d'une partie en creux du moule pour former, entre ladite deuxième partie du noyau et la partie en creux du moule, à l'état inséré de manière au moins partielle du noyau dans la cavité de moulage du moule, et fermé de la cavité de moulage, un deuxième espace de moulage de la base du manchon, cette deuxième partie du noyau étant une partie dite mobile déplaçable axialement suivant une direction parallèle à l'axe d'enroulement des filets du filetage hélicoïdal de la première partie du noyau, dans le sens d'un écartement ou d'un rapprochement de la première partie du noyau, à l'état inséré du noyau dans la cavité de moulage. La réalisation du noyau en plusieurs parties séparables permet de limiter les frottements au niveau de la base lors du dévissage et la réalisation d'un manchon à base non circulaire.

Selon un mode de réalisation de l'outillage, lesdites première et deuxième parties du noyau sont, en position rapprochée l'une de l'autre, couplées l'une à l'autre par un montage à emboitement coulissant avec une direction d'emboitement s'étendant parallèlement à l'axe d'enroulement des filets du filetage hélicoïdal de la première partie du noyau.

Selon un mode de réalisation de l'outillage, le noyau comprend, dans le prolongement de la première partie du noyau, à une extrémité de la forme cylindrique ou cylindro-conique de ladite première partie du noyau, une section d'arbre sur laquelle la deuxième partie du noyau est enfilée pour un montage à emboitement coulissant entre lesdites première et deuxième parties du noyau. Ainsi, la deuxième partie du noyau est maintenue de manière sûre, centrée par rapport à la première partie du noyau. Il en résulte une fabrication plus précise et sûre du manchon.

Selon un mode de réalisation, le moule et le noyau sont configurés pour permettre, en parallèle du déplacement des parties du moule entre une position fermée et une position ouverte de la cavité de moulage, le déplacement de la deuxième partie du noyau entre une position rapprochée de la première partie du noyau et une position écartée de la première partie du noyau. Il en résulte un temps de cycle réduit.

Selon un mode de réalisation, le noyau comprend une troisième partie s'étendant dans le prolongement de la deuxième partie et solidaire en déplacement de la deuxième partie, avec la deuxième partie s'étendant entre la première partie et la troisième partie du noyau, cette troisième partie comprenant deux bras ou respectivement logements formant entre eux un V ouvert en direction de la première partie du noyau, ces deux bras ou respectivement logements étant aptes coopérer avec des logements ou respectivement bras de forme complémentaire des parties du moule pour assurer, en parallèle du déplacement des parties du moule dans le sens d'un écartement correspondant à l'ouverture du moule, un déplacement axial de la deuxième partie du noyau dans le sens d'un écartement de la première partie du noyau.

Selon un mode de réalisation, l'outillage comprend des moyens d'entraînement en déplacement relatif en rotation de la première partie du noyau et du manchon autour d'un axe parallèle à l'axe d'enroulement des filets du filetage hélicoïdal de la première partie du noyau. En effet, même s'il serait possible d'envisager un démoulage par dévissage manuel, de préférence, ce dévissage est automatisé. Les moyens d'entraînement en rotation peuvent être configurés pour entraîner en rotation le manchon et/ou la première partie du noyau.

Selon un mode de réalisation, l'outillage comprend des moyens d'injection d'un fluide sous pression, lesdits moyens d'injection étant logés au moins partiellement à l'intérieur de ladite première partie du noyau, cette première partie du noyau se présentant sous forme d'un corps creux.

Ces moyens d'injection d'un fluide sous pression tel que de l'air décollent les parois du manchon du noyau et limitent les frottements entre manchon et noyau lors du déplacement relatif en rotation du manchon et du noyau. Les orifices de sortie de fluide des moyens d'injection sont recouverts par les parties mobiles du noyau en position injection de la matière et dégagés en position ouverte du moule.

Selon un mode de réalisation, la zone de la deuxième partie du noyau de forme complémentaire de la partie en creux du moule pour former, entre ladite deuxième partie du noyau et la partie en creux du moule le deuxième espace de moulage est une surface polylobée formée d'évidements de préférence en arc de cercle reliés entre eux par des segments de surface de préférence circulaire. Ces surfaces, lorsqu'elles sont circulaires, sont de rayon de centre passant par l'axe d'enroulement de filets de filetage hélicoïdal de la première partie de noyau.

Selon un mode de réalisation, le noyau comprend, dans le prolongement de la première partie du noyau, à une extrémité de la forme cylindrique ou cylindro-conique de ladite première partie du noyau opposée à celle positionnable en regard de la deuxième partie du noyau, un corps cylindrique de forme complémentaire d'une partie en creux du moule pour former, entre ledit corps cylindrique du noyau et la partie en creux du moule, à l'état inséré du noyau dans la cavité de moulage du moule et fermé de la cavité de moulage, un troisième espace de moulage d'une extrémité du manchon opposée à la base du manchon. Ce corps cylindrique peut être réalisé d'une seule pièce ou de manière séparée, avec la première partie du noyau. De préférence, lorsque ce corps cylindrique est séparé, il vient se centrer dans l'extrémité de la première partie du noyau par un cône et centre celle-ci dans les deux parties du moule fermé.

Selon un mode de réalisation, l'outillage comprend des moyens de maintien du noyau à l'état inséré de manière au moins partielle dans la cavité de moulage. Ces moyens de maintien permettent un maintien en position d'au moins certaines parties du noyau dans le moule, sans nuire à l'entraînement en rotation de la première partie du noyau, si nécessaire.

L'invention a encore pour objet un noyau apte à s'insérer au moins partiellement à l'intérieur de la cavité de moulage d'un moule en au moins deux parties pour l'obtention d'un outillage en vue de la fabrication d'un manchon, encore appelé soufflet hélicoïdal, comprenant un corps creux moulé cylindrique ou cylindro-conique comportant une partie à soufflet déformable disposée dans le prolongement d'une base formant une extrémité du manchon, ledit manchon étant formé par remplissage, à l'aide d'une matière de remplissage, de l'espace laissé libre entre le noyau et l'intérieur de la cavité de moulage, à l'état inséré de manière au moins partielle du noyau dans la cavité de moulage et fermé de la cavité de moulage, caractérisé en ce que le noyau est en au moins deux parties séparables et comprend une partie dite première partie cylindrique ou cylindro-conique munie extérieurement d'un filetage hélicoïdal, une deuxième partie et, dans le prolongement de la première partie du noyau à une extrémité de la forme cylindrique ou cylindro-conique de ladite première partie du noyau, une section d'arbre sur laquelle la deuxième partie du noyau est apte à être enfilée pour un montage à emboitement coulissant entre lesdites première et deuxième parties du noyau pour permettre un déplacement axial de la deuxième partie du noyau suivant une direction parallèle à l'axe d'enroulement des filets du filetage hélicoïdal de la première partie du noyau, dans le sens d'un écartement ou d'un rapprochement de la première partie du noyau.

### BRÈVE DESCRIPTION DES DESSINS

L'invention sera bien comprise à la lecture de la description suivante d'exemples de réalisation, en référence aux dessins annexés dans lesquels :
- La figure 1 représente une vue schématique partielle en coupe d'un outillage conforme à l'invention, en position ouverte de la cavité de moulage avant injection.
- La figure 2 représente une vue schématique partielle en coupe d'un outillage conforme à l'invention, en position fermée de la cavité de moulage et après injection de la matière de remplissage du moule.
- La figure 3 représente une vue schématique partielle en coupe d'un outillage conforme à l'invention, au cours de l'ouverture de la cavité de moulage pour illustrer le déplacement axial simultané de la deuxième partie du noyau.
- La figure 4 représente une vue schématique partielle en coupe d'un outillage conforme à l'invention, en position ouverte de la cavité de moulage à l'état dévissé du manchon.
- La figure 5 représente une vue en perspective d'un manchon.
- La figure 6 représente une vue partielle en perspective du noyau et de ses moyens de maintien, les deuxième et troisième parties du noyau ayant été omises.
- La figure 7 représente une vue en perspective du noyau et de ses moyens de maintien, en position écartée de la première et de la deuxième partie du noyau.
- La figure 8 représente une vue en perspective du noyau et de ses moyens de maintien, en position rapprochée de la première et de la deuxième partie du noyau.

### DESCRIPTION DÉTAILLÉE

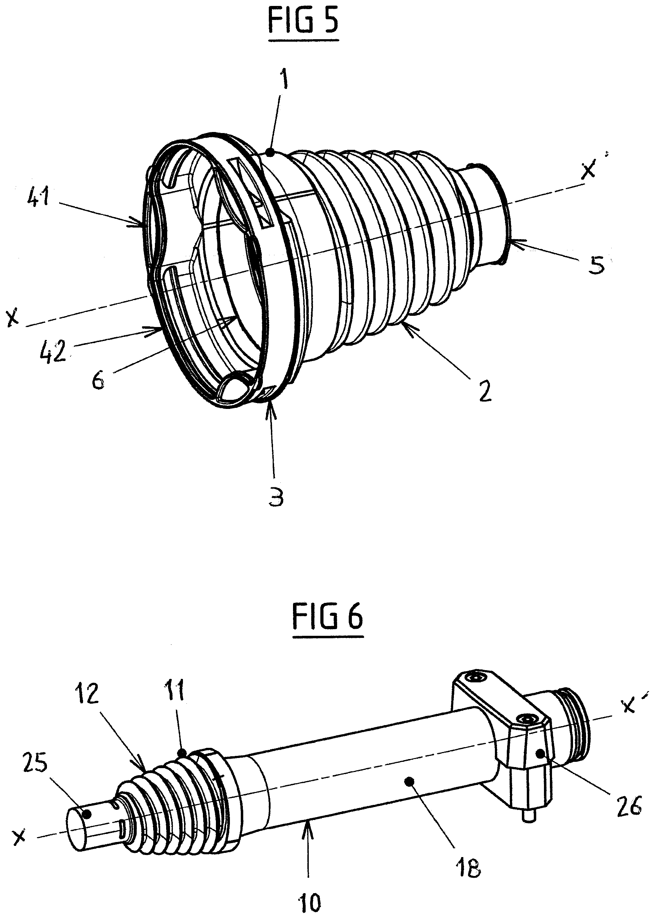

Comme mentionné ci-dessus, l'invention a pour objet un procédé pour la fabrication d'un manchon 1 encore appelé soufflet hélicoïdal, qui peut être conforme à la figure 5.

Ce manchon 1 est une pièce moulée par injection et réalisée généralement en matière thermoplastique, notamment en polyester, en polyamide ou en polyuréthane. Ce manchon 1 comprend un corps creux moulé, ici cylindro-conique. Ce manchon 1 comprend une partie 2 à soufflet déformable, disposée dans le prolongement d'une base 3 formant une extrémité du manchon 1. La partie 2 à soufflet présente des spires formant un enroulement hélicoïdal autour de l'axe longitudinal du corps cylindro-conique. La base 3 est ici une base de forme extérieure circulaire et de forme intérieure non circulaire. La forme intérieure de la base 3 est polylobée, en l'occurrence trilobée, avec les renflements correspondant aux lobes représentés en 41 et les tronçons circulaires de rayon de centre passant par l'axe longitudinal du corps reliant entre eux les renflements représentés en 42.

Ce manchon 1 comporte encore, à son extrémité opposée à celle munie de la base 3, d'une partie généralement circulaire appelée petite base 5 du manchon. Ce manchon présente, du fait de sa fabrication, au moins un plan 6 de joint visible intérieurement à la jonction de la base 3 avec la partie 2 à soufflet du manchon 1. Ce plan 6 de joint forme une ligne circonférentielle interne circulaire. Ce plan de joint est ménagé dans une surface axiale du manchon, c'est-à-dire une surface du manchon qui s'étend parallèlement à l'axe longitudinal du manchon, par opposition à une surface radiale. La ligne circonférentielle interne circulaire formée par le plan de joint s'étend dans un plan perpendiculaire à l'axe longitudinal du corps cylindro-conique.

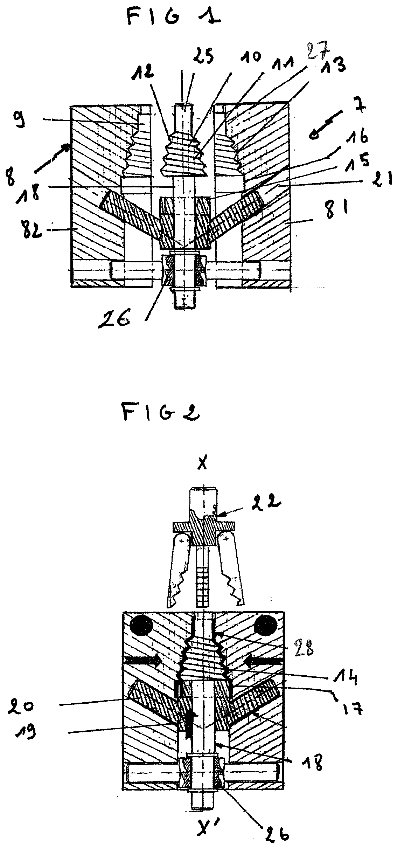

Pour permettre la fabrication d'un manchon conforme à celui représenté à la figure 5, un outillage 7 conforme à celui représenté aux figures 1 à 4 et 6 peut être utilisé. Cet outillage 7 comprend ici un moule 8 formé en deux parties 81, 82 formant chacune une coquille du moule 8. Ces deux parties 81, 82 du moule 8 délimitent une cavité 9 de moulage. Ces deux parties 81, 82 de moule sont montées sur un bâti, mobiles à coulissement dans le sens d'un rapprochement et d'un écartement l'une de l'autre, pour le passage de la cavité 9 de moulage de la position ouverte correspondant à la position écartée des parties 81, 82 du moule 8 à la position fermée correspondant à la position rapprochée des parties 81, 82 du moule 8. Ce moule 8 est généralement en métal, de manière en soi connue pour un moule d'injection.

L'outillage 7 comprend encore un noyau 10 insérable au moins partiellement à l'intérieur de la cavité 9 de moulage. Ce noyau 10 comprend une première partie 11, ici cylindro-conique, munie extérieurement d'un filetage 12 hélicoïdal complémentaire d'un filetage 13 hélicoïdal du moule 8 pour former, entre lesdits filetages 12, 13 hélicoïdaux, à l'état inséré de manière au moins partielle du noyau 10 dans la cavité 9 de moulage et fermé de la cavité 9 de moulage, un premier espace 14 de moulage de la partie 2 à soufflet à spires hélicoïdales du manchon 1.

Ce noyau 10 comprend une deuxième partie 15, complémentaire d'une partie 16 en creux du moule 8 pour former, entre la deuxième partie 15 du noyau 10 et la partie 16 en creux du moule 8, à l'état inséré du noyau 10 dans la cavité 9 de moulage du moule et fermé de la cavité 9 de moulage, un deuxième espace de moulage de la base 3 du manchon 1.

Cette deuxième partie 15 du noyau 10 est une partie dite mobile, déplaçable axialement suivant une direction parallèle à l'axe XX' d'enroulement des filets du filetage 12 hélicoïdal de la première partie 11 du noyau 10 dans le sens d'un écartement ou d'un rapprochement de la première partie 11 du noyau 10 à l'état inséré de manière au moins partielle du noyau 10 dans la cavité 9 de moulage.

La zone de la deuxième partie 15 du noyau 10 de forme complémentaire de la partie 16 en creux du moule 8 pour former, entre la deuxième partie 15 du noyau 10 et la partie 16 en creux du moule 8, le deuxième espace 17 de moulage est une surface 24 polylobée formée d'évidements 241 en arc de cercle reliés entre eux par des segments 242 de surface circulaire de rayon de centre passant par l'axe XX' d'enroulement des filets du filetage hélicoïdal de la première partie 11 du noyau 10.

Cette deuxième partie 15 du noyau possède localement une surface extérieure cylindrique ou légèrement conique permettant le bon centrage de la seconde partie du noyau dans les deux demi-coquilles 81 et 82 du moule lorsque celui-ci est fermé. Ainsi, le noyau complet est parfaitement centré à l'intérieur du moule et garantit une bonne répétabilité des fines épaisseurs du manchon.

Pour permettre un déplacement axial de la deuxième partie 15 du noyau 10, le noyau 10 comprend, dans le prolongement de la première partie 11 du noyau 10, à une extrémité de la forme cylindro-conique de ladite première partie 11 du noyau 10, une section d'arbre 18 sur laquelle la deuxième partie 15 du noyau 10 est enfilée pour un montage à emboitement coulissant entre lesdites première et deuxième parties 11, 15 du noyau 10. Cette deuxième partie 15 du noyau 10 a donc une forme générale annulaire avec une surface intérieure circulaire et une surface extérieure telle que décrite ci-dessus. La deuxième partie 15 du noyau est conformée extérieurement pour former, sur une partie de sa surface, un moyen de centrage de ladite deuxième partie à l'intérieur du moule en position fermée du moule.

La section d'arbre 18 est solidaire en déplacement de la première partie 11 du noyau 10. De préférence, la section d'arbre 18 et la première partie 11 du noyau sont réalisées d'une seule pièce.

La section d'arbre 18 s'étend de manière coaxiale à l'axe XX' d'enroulement des filets du filetage 12 hélicoïdal de la première partie 11 du noyau 10. Cette section d'arbre 8 est pré-positionnée à l'intérieur de la cavité 9 de moulage, par l'intermédiaire de moyens 26 de maintien formés ici par une bague formant palier, à l'intérieur de laquelle l'extrémité libre de la section d'arbre 18 s'insère, cette bague pouvant être disposée à l'intérieur ou à l'extérieur de l'espace ménagé entre les parties 81, 82 du moule 8.

Dans l'exemple représenté, le moule 8 et le noyau 10 sont configurés pour permettre, en parallèle du déplacement des parties 81, 82 du moule 8 entre une position fermée et une position ouverte, le déplacement de la deuxième partie 15 du noyau 10 entre une position rapprochée de la première partie 11 du noyau 10 et une position écartée de la première partie 11 du noyau 10.

Dans ce mode de réalisation, le noyau 10 comprend une troisième partie 19 s'étendant dans le prolongement de la deuxième partie 15 et solidaire en déplacement de la deuxième partie 15, avec la deuxième partie 15 s'étendant entre la première partie 11 et la troisième partie 19 du noyau 10.

Cette troisième partie 19 comprend une bague coulissant sur la section d'arbre 8, cette bague coulissante étant munie de deux bras 20 formant entre eux un V ouvert en direction de la première partie 11 du noyau 10. Ces deux bras 20 sont aptes à s'insérer dans des logements 21 de forme complémentaire des parties 81, 82 du moule 8 et coopèrent avec lesdits logements 21 pour permettre, en parallèle du déplacement des parties 81, 82 du moule 8 dans le sens d'un écartement correspondant à l'ouverture du moule 8, un déplacement axial de la deuxième partie 15 du noyau 10 dans le sens d'un écartement de la première partie 11 du noyau 10.

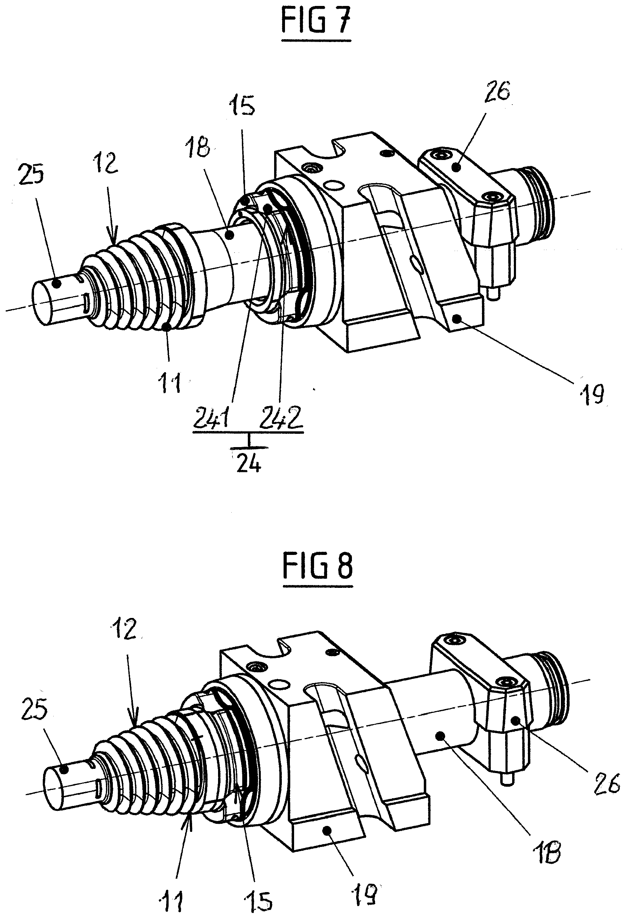

En variante, il peut être prévu l'inverse, à savoir les bras portés par le moule et les logements par le noyau comme illustré à la figure 7 où des logements sont représentés au niveau du noyau.

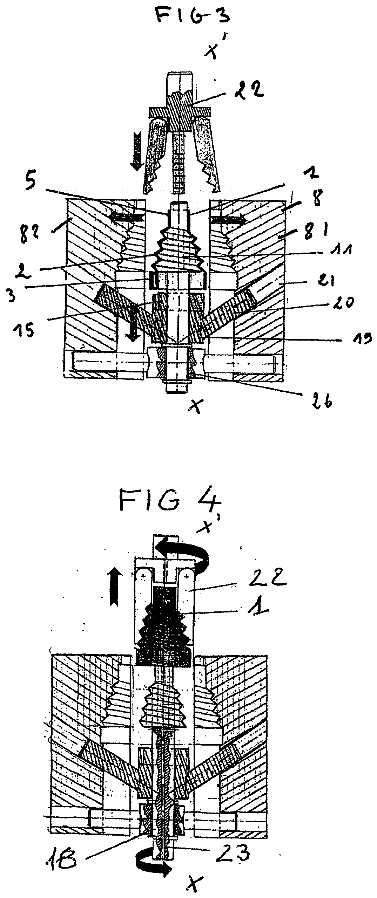

Ainsi, dans ce mode de réalisation, lorsque les parties 81, 82 du moule 8 sont entraînées en déplacement dans le sens d'un écartement l'une de l'autre, comme illustré à la figure 3, les bras 20 tendent, sous l'action de cet écartement, à se déplacer à coulissement dans le sens d'une sortie des logements 21 des parties de moule, en se déplaçant dans le sens d'un éloignement de la partie 11 du noyau 10.

À l'inverse, lorsque les parties 81, 82 du moule 8 se rapprochent l'une de l'autre, comme illustré à la figure 2, les bras 20 tendent, sous l'action de ce rapprochement, à se déplacer à coulissement dans le sens d'une rentrée dans les logements 21 des parties de moule, en se déplaçant dans le sens d'un rapprochement de la première partie 11 du noyau 10.

Ainsi, la deuxième partie 15 du noyau 10 tend à se rapprocher de la première partie du noyau lors de la fermeture de la cavité de moulage et à s'écarter de la première partie du noyau lors de l'ouverture de la cavité de moulage.

Les moyens d'entraînement en déplacement des parties 81, 82 du moule dans le sens d'un rapprochement et d'un écartement sont des moyens classiques à ce type de moule, et sont formés, par exemple, par des vérins associés à des moyens de guidage des parties de moule. Ils ne seront donc pas décrits en détail, car ils sont bien connus à ceux versés dans cet art.

Le noyau 10 comprend, dans le prolongement de la première partie 11 du noyau 10, à une extrémité de la forme cylindro-conique de ladite première partie 11 du noyau 10 opposée à celle positionnable en regard de la deuxième partie 15 du noyau 10, un corps 25 cylindrique, de forme complémentaire d'une partie 27 en creux du moule 8, pour former entre ledit corps 25 cylindrique du noyau 10 et la partie 27 en creux du moule 8, à l'état inséré du noyau 10 dans la cavité 9 de moulage du moule 8 et fermé de la cavité 9 de moulage, un troisième espace 28 de moulage de l'extrémité du manchon 1 opposée à la base 3 du manchon 1 et appelée petite base 5 du manchon 1.

Dans l'exemple représenté, ce corps 25 cylindrique et la première partie 11 du noyau 10 sont réalisés d'une seule pièce. Le corps 25 cylindrique aurait pu, de manière équivalente à la deuxième partie 15 du noyau 10, être réalisé séparé de la première partie du noyau 10 et soit enfilé sur une section d'arbre s'étendant dans le prolongement de la première partie du noyau, pour un montage à emboîtement coulissant entre ledit corps 25 cylindrique et la première partie 11 du noyau 10, soit enfilé sur un palier fixe de l'outillage. Dans ce cas, le manchon serait pourvu intérieurement, au niveau de la zone de jonction entre la petite base 5 et la partie 2 à soufflet du manchon 1, d'un plan de joint supplémentaire.

Pour parfaire l'ensemble, l'outillage comprend encore des moyens 23 d'injection d'un fluide sous pression, lesdits moyens 23 d'injection étant logés au moins partiellement à l'intérieur de la première partie 11 du noyau 10, cette première partie 11 du noyau 10 se présentant sous forme d'un corps creux.

Ainsi, ces moyens 23 d'injection d'un fluide sous pression, en l'occurrence de l'air, peuvent comprendre un conduit relié à une extrémité à une source d'alimentation en air sous pression, et débouchant à son autre extrémité à l'interface de chaque jonction des parties mobiles du noyau représenté en figure 4. Les positionnements des débouchés dans les surfaces de jonction permettent, lors de l'injection de la matière, de ne pas remplir ces orifices car les parties mobiles du noyau obstruent ces orifices de débouchage lors de l'injection de la matière et les découvrent lors du mouvement de recul des parties mobiles du noyau.

L'outillage 7 comprend enfin des moyens 22 d'entraînement en déplacement relatif en rotation de la première partie 11 du noyau 10 et du manchon 1 autour d'un axe parallèle à l'axe XX' d'enroulement des filets du filetage 12 hélicoïdal de la première partie 11 du noyau 10. Dans l'exemple représenté à la figure 4, ces moyens 22 sont des moyens d'entraînement en rotation du manchon 1 et affectent la forme d'une pince apte à saisir ledit manchon et l'entraîner en rotation autour de l'axe XX'. Des moyens d'entraînement en rotation du noyau auraient pu être prévus de manière supplémentaire ou en alternative.

Dans l'exemple représenté à la figure 4, la section d'arbre 18, solidaire en déplacement de la première partie 11 du noyau 10, est représentée rotative et montée à rotation autour de l'axe XX' d'enroulement des filets du filetage 12 hélicoïdal de la première partie du noyau 10.

Les moyens 22 d'entraînement en rotation sont alors des moyens d'entraînement en rotation de la section d'arbre 18, l'entraînement en rotation pouvant se faire par engrènement, transmission sans fin ou autres.

À l'aide d'un outillage 7 tel que décrit ci-dessus, la fabrication d'un manchon s'opère comme suit : le moule 8 est en position ouverte et le noyau 10 est logé et maintenu à l'intérieur de la cavité 9 de moulage, comme illustré à la figure 1, c'est-à-dire avec la deuxième partie du noyau écartée de la première partie du noyau.

On commande, dans un premier temps, le rapprochement des parties 81, 82 du moule, pour le passage en position fermée de la cavité 9 de moulage. Ce rapprochement des parties 81, 82 du moule 8 entraîne en parallèle le rapprochement de la deuxième partie 15 du noyau 10 de la première partie 11 du noyau, par coopération des bras 20 et des logements 21.

Dans cette position fermée de la cavité 9 de moulage, la matière de remplissage des premier, deuxième, et troisième espaces de moulages est injectée. Cette matière de remplissage remplit donc l'espace laissé libre entre l'intérieur de la cavité de moulage et le noyau, comme illustré à la figure 2.

Une fois l'étape d'injection achevée, on ouvre le moule. Au cours de cette ouverture du moule, la deuxième partie 15 du noyau 10 s'écarte de la première partie 11 du noyau 10. De l'air est injecté entre la paroi intérieure du manchon et la paroi extérieure de la première partie 11 du noyau 10 pour décoller la paroi du manchon du noyau 10. La pince saisit encore le manchon, pour l'entraîner en rotation dans le sens d'un dévissage de la première partie 11 du noyau 10. En variante ou en complément, la première partie 11 du noyau 10 peut être entraînée en rotation.

De même, dans l'exemple représenté, le déplacement axial de la deuxième partie du noyau dans le sens d'un écartement de la première partie du noyau 10 s'opère simultanément à l'ouverture du moule. Ce déplacement axial aurait pu être commandé après ouverture du moule, sans sortir du cadre de l'invention même si la solution à ouverture simultanée est préférée.

Le manchon obtenu offre une excellente résistance mécanique.

## Revendications

1. Procédé pour la fabrication par injection d'un manchon (1), encore appelé soufflet hélicoïdal, comprenant un corps creux moulé, cylindrique ou cylindro-conique, comportant au moins une partie (2) à soufflet déformable disposée dans le prolongement d'une base (3) formant une extrémité du manchon (1), à l'aide d'un outillage (7) comprenant un moule (8) en au moins deux parties (81, 82) délimitant une cavité (9) de moulage apte à passer d'une position ouverte à une position fermée, et inversement, par déplacement relatif desdites parties (81, 82) de moule (8), et un noyau (10), insérable au moins partiellement à l'intérieur de la cavité (9) de moulage, et comprenant une partie, dite première partie (11), cylindrique ou cylindro-conique munie extérieurement d'un filetage (12) hélicoïdal complémentaire d'un filetage (13) hélicoïdal du moule (8) pour former entre lesdits filetages (12, 13) hélicoïdaux, à l'état fermé de ladite cavité (9) de moulage, un premier espace (14) de moulage de la partie (2) à soufflet du manchon (1), le noyau (10) comprenant en sus de la première partie (11) cylindrique ou cylindro-conique munie extérieurement d'un filetage (12) hélicoïdal, une deuxième partie (15) dite mobile complémentaire d'une partie (16) en creux du moule (8) pour former entre ladite deuxième partie (15) du noyau (10) et la partie (16) en creux du moule (8), à l'état fermé de ladite cavité (9) de moulage, un deuxième espace (17) de moulage de la base (3) du manchon (1), ledit procédé comprenant, à l'état inséré de manière au moins partielle du noyau (10) dans la cavité (9) de moulage et fermé de la cavité (9) de moulage, une étape de remplissage par injection de matière des premier et deuxième espaces (14, 17) de moulage laissés libres entre le noyau (10) et l'intérieur de la cavité (9) de moulage, **caractérisé en ce que** ledit procédé comprend en outre une étape d'ouverture du moule (8) au cours, ou à l'issue de laquelle, la deuxième partie (15) du noyau (10) est déplacée axialement suivant une direction parallèle à l'axe (XX') d'enroulement des filets du filetage (12) hélicoïdal de la première partie (11) du noyau (10) dans le sens d'un écartement de la première partie (11) du noyau (10), et une étape d'entraînement en déplacement relatif en rotation du manchon (1) et de la première partie (11) du noyau (10) en vue d'un démoulage par dévissage du manchon (1).

2. Procédé pour la fabrication par injection d'un manchon (1) selon la revendication 1, **caractérisé en ce que** ledit procédé comprend, avant l'étape d'entraînement en déplacement relatif en rotation du manchon (1) et de la première partie (11) du noyau (10) en vue d'un démoulage par dévissage du manchon (1), une étape d'injection d'un fluide sous pression entre la première partie (11) du noyau (10) et le manchon (1).

3. Outillage (7) pour la fabrication par injection d'un manchon (1), encore appelé soufflet hélicoïdal, comprenant un corps creux moulé, cylindrique ou cylindro-conique, comportant une partie (2) à soufflet déformable disposée dans le prolongement d'une base (3) formant une extrémité du manchon (1), ledit outillage (7) comprenant un moule (8) en au moins deux parties (81, 82) délimitant une cavité (9) de moulage apte à passer d'une position ouverte à une position fermée, et inversement, par déplacement relatif desdites parties (81, 82) de moule, et un noyau (10) insérable au moins partiellement à l'intérieur de la cavité (9) de moulage, ledit manchon (1) étant formé par remplissage, à l'aide d'une matière de remplissage, de l'espace laissé libre entre le noyau (10) et l'intérieur de la cavité (9) de moulage, le noyau (10) étant en au moins deux parties (11, 15) séparables et comprenant une partie dite première partie (11) cylindrique ou cylindro-conique munie extérieurement d'un filetage (12) hélicoïdal complémentaire d'un filetage (13) hélicoïdal du moule (8) pour former entre lesdits filetages (12, 13) hélicoïdaux, à l'état inséré de manière au moins partielle du noyau (10) dans la cavité (9) de moulage et fermé de la cavité de moulage, un premier espace de moulage (14) de la partie (2) à soufflet à spires hélicoïdales du manchon (1), et une deuxième partie (15) complémentaire d'une partie (16) en creux du moule (8) pour former, entre ladite deuxième partie (15) du noyau (10) et la partie (16) en creux du moule (8), à l'état inséré de manière au moins partielle du noyau (10) dans la cavité (9) de moulage du moule, et fermé de la cavité de moulage, un deuxième espace (17) de moulage de la base (3) du manchon (1), **caractérisé en ce que** la deuxième partie (15) du noyau (10) est une partie dite mobile déplaçable axialement suivant une direction parallèle à l'axe (XX') d'enroulement des filets du filetage (12) hélicoïdal de la première partie (11) du noyau (10), dans le sens d'un écartement ou d'un rapprochement de la première partie (11) du noyau (10), à l'état inséré du noyau (10) dans la cavité (9) de moulage.

4. Outillage (7) selon la revendication précédente, **caractérisé en ce que** lesdites première et deuxième parties (11, 15) du noyau (10) sont, en position rapprochée l'une de l'autre, couplées l'une à l'autre par un montage à emboitement coulissant avec une direction d'emboitement s'étendant parallèlement à l'axe (XX') d'enroulement des filets du filetage (12) hélicoïdal de la première partie (11) du noyau (10).

5. Outillage (7) selon l'une des revendications 3 ou 4, **caractérisé en ce que** le noyau (10) comprend, dans le prolongement de la première partie (11) du noyau (10), à une extrémité de la forme cylindrique ou cylindro-conique de ladite première partie (11) du noyau (10), une section d'arbre (18) sur laquelle la deuxième partie (15) du noyau (10) est enfilée pour un montage à emboitement coulissant entre lesdites première et deuxième parties (11, 15) du noyau (10).

6. Outillage (7) selon l'une des revendications 3 à 5, **caractérisé en ce que** le moule (8) et le noyau (10) sont configurés pour permettre, en parallèle du déplacement des parties (81, 82) du moule (8) entre une position fermée et une position ouverte de la cavité de moulage, le déplacement de la deuxième partie (15) du noyau (10) entre une position rapprochée de la première partie (11) du noyau (10) et une position écartée de la première partie (11) du noyau (10).

7. Outillage (7) selon la revendication 6, **caractérisé en ce que** le noyau (10) comprend une troisième partie (19) s'étendant dans le prolongement de la deuxième partie (15) et solidaire en déplacement de la deuxième partie (15), avec la deuxième partie (15) s'étendant entre la première partie (11) et la troisième partie (19) du noyau (10), cette troisième partie (19) comprenant deux bras (20) ou respectivement logements formant entre eux un V ouvert en direction de la première partie (11) du noyau (10), ces deux bras (20) ou respectivement logements, étant aptes à coopérer avec des logements (21) ou respectivement bras de forme complémentaire des parties (81, 82) du moule (8) pour assurer, en parallèle du déplacement des parties (81, 82) du moule (8) dans le sens d'un écartement correspondant à l'ouverture du moule (8), un déplacement axial de la deuxième partie (15) du noyau (10) dans le sens d'un écartement de la première partie (11) du noyau (10).

8. Outillage (7) selon l'une des revendications 3 à 7, **caractérisé en ce qu'**il comprend des moyens (22) d'entraînement en déplacement relatif en rotation de la première partie (11) du noyau (10) et du manchon (1) autour d'un axe parallèle à l'axe (XX') d'enroulement des filets du filetage (12) hélicoïdal de la première partie (11) du noyau (10).

9. Outillage (7) selon l'une des revendications 3 à 8, **caractérisé en ce qu'**il comprend des moyens (23) d'injection d'un fluide sous pression, lesdits moyens (23) d'injection étant logés au moins partiellement à l'intérieur de ladite première partie (11) du noyau (10), cette première partie (11) du noyau (10) se présentant sous forme d'un corps creux.

10. Outillage (7) selon l'une des revendications 3 à 9, **caractérisé en ce que** la zone de la deuxième partie (15) du noyau (10) de forme complémentaire de la partie (16) en creux du moule (8) pour former, entre ladite deuxième partie (15) du noyau (10) et la partie (16) en creux du moule (8) le deuxième espace (17) de moulage est une surface (24) polylobée formée d'évidements (241) en arc de cercle reliés entre eux par des segments (242) de surface circulaire.

11. Outillage (7) selon l'une des revendications 3 à 10, **caractérisé en ce que** le noyau (10) comprend, dans le prolongement de la première partie (11) du noyau (10), à une extrémité de la forme cylindrique ou cylindro-conique de ladite première partie (11) du noyau (10) opposée à celle positionnable en regard de la deuxième partie (15) du noyau (10), un corps (25) cylindrique de forme complémentaire d'une partie (27) en creux du moule (8) pour former, entre ledit corps (25) cylindrique du noyau (10) et la partie (27) en creux du moule (8), à l'état inséré du noyau (10) dans la cavité (9) de moulage du moule (8) et fermé de la cavité (9) de moulage, un troisième espace (28) de moulage d'une extrémité du manchon (1) opposée à la base (3) du manchon (1).

12. Outillage (7) selon l'une des revendications 3 à 11, **caractérisé en ce qu'**il comprend des moyens (26) de maintien du noyau (10) à l'état inséré de manière au moins partielle dans la cavité (9) de moulage.

13. Noyau (10) apte à s'insérer au moins partiellement à l'intérieur de la cavité (9) de moulage d'un moule (8) en au moins deux parties (81, 82) pour l'obtention d'un outillage (7) conforme à l'une des revendications 3 à 12 en vue de la fabrication d'un manchon (1), encore appelé soufflet hélicoïdal, comprenant un corps creux moulé cylindrique ou cylindro-conique comportant une partie (2) à soufflet déformable disposée dans le prolongement d'une base (3) formant une extrémité du manchon (1), ledit manchon (1) étant formé par remplissage, à l'aide d'une matière de remplissage, de l'espace laissé libre entre le noyau (10) et l'intérieur de la cavité (9) de moulage, à l'état inséré de manière au moins partielle du noyau (10) dans la cavité (9) de moulage et fermé de la cavité (9) de moulage, ledit noyau (10) étant en au moins deux parties séparables et comprenant une partie dite première partie (11) cylindrique ou cylindro-conique munie extérieurement d'un filetage (12), une deuxième partie (15) et, dans le prolongement de la première partie (11) du noyau (10) à une extrémité de la forme cylindrique ou cylindro-conique de ladite première partie (11) du noyau (10), une section d'arbre (18), **caractérisé en ce que** le filetage (12) de la première partie (11) du noyau (10) est un filetage hélicoïdal, **en ce que** la section d'arbre (18) sur laquelle la deuxième partie (11) du noyau (10) est apte à être enfilée pour un montage à emboitement coulissant entre lesdites première et deuxième parties (11, 15) du noyau (10) pour permettre un déplacement axial de la deuxième partie (15) du noyau (10) suivant une direction parallèle à l'axe (XX') d'enroulement des filets du filetage (12) hélicoïdal de la première partie (11) du noyau (10), dans le sens d'un écartement ou d'un rapprochement de la première partie (11) du noyau (10) est solidaire en déplacement de la première partie (11) du noyau (10).

14. Noyau (10) selon la revendication 13,
**caractérisé en ce que** la section d'arbre (18) et la première partie (11) du noyau sont réalisées d'une seule pièce.

## Patentansprüche

1. Verfahren zur Herstellung einer Hülse (1), auch als Schraubenbalg bezeichnet, durch Spritzgießen, umfassend einen zylindrischen oder zylindrisch-konischen geformten Hohlkörper, der mindestens einen verformbaren Balgteil (2) aufweist, der in der Verlängerung einer Basis (3) angeordnet ist, die ein Ende der Hülse (1) bildet, mit Hilfe eines Werkzeugs (7), das eine Form (8) aus mindestens zwei Teilen (81, 82) bildet, die einen Formgebungshohlraum (9) begrenzt, der imstande ist, aus einer geöffneten Position in eine geschlossene Position zu wechseln und umgekehrt, durch relative Verlagerung der Teile (81, 82) der Form (8), und einen Kern (10), der mindestens teilweise in das Innere des Formgebungshohlraums (9) einsetzbar ist, und umfassend einen als erster Teil (11) bezeichneten zylindrischen oder zylindrisch-konischen Teil, der außen mit einem Schraubengewinde (12) ausgestattet ist, das zu einem Schraubengewinde (13) der Form (8) komplementär ist, um zwischen den Schraubengewinden (12, 13) in geschlossenem Zustand des Formgebungshohlraums (9) einen ersten Formgebungsraum (14) des Balgteils (2) der Hülse (1) zu bilden, wobei der Kern (10) zusätzlich zu dem zylindrischen oder zylindrisch-konischen ersten Teil (11), der außen mit einem Schraubengewinde (12) ausgestattet ist, einen zweiten als beweglich bezeichneten Teil (15) umfasst, der komplementär zu einem Hohlteil (16) der Form (8) ist, um zwischen dem zweiten Teil (15) des Kerns (10) und dem Hohlteil (16) der Form (8) in geschlossenem Zustand des Formgebungshohlraums (9) einen zweiten Formgebungsraum (17) der Basis (3) der Hülse (1) zu bilden, wobei das Verfahren im mindestens teilweise eingesetzten Zustand des Kerns (10) in den Formgebungshohlraum (9) und geschlossenen Zustand des Formgebungshohlraums (9) einen Schritt des Füllens, durch Spritzgießen von Material, des ersten und zweiten Formgebungsraums (14, 17) umfasst, die zwischen dem Kern (10) und dem Inneren des Formgebungshohlraums (9) freigelassen sind, **dadurch gekennzeichnet, dass** das Verfahren ferner einen Schritt des Öffnens der Form (8) umfasst, bei dem oder nach dessen Ablauf der zweite Teil (15) des Kerns (10) axial gemäß einer Richtung verlagert wird, die parallel zur Wickelachse (XX') der Gewindegänge des Schraubengewindes (12) des ersten Teils (11) des Kerns (10) in Richtung einer Beabstandung vom ersten Teil (11) des Kerns (10) verlagert wird, und einen Schritt des relativen Rotationsverlagerungsantriebs der Hülse (1) und des ersten Teils (11) des Kerns (10) im Hinblick auf ein Entformen durch Abschrauben der Hülse (1).

2. Verfahren zur Herstellung einer Hülse (1) durch Spritzgießen nach Anspruch 1, **dadurch gekennzeichnet, dass** das Verfahren vor dem Schritt des relativen Rotationsverlagerungsantriebs der Hülse (1) und des ersten Teils (11) des Kerns (10) im Hinblick auf ein Entformen durch Abschrauben der Hülse (1) einen Schritt des Einspritzens eines Fluids unter Druck zwischen den ersten Teil (11) des Kerns (10) und die Hülse (1) umfasst.

3. Werkzeug (7) zur Herstellung einer Hülse (1), auch als Schraubenbalg bezeichnet, durch Spritzgießen, umfassend einen zylindrischen oder zylindrisch-konischen geformten Hohlkörper, der mindestens einen verformbaren Balgteil (2) aufweist, der in der Verlängerung einer Basis (3) angeordnet ist, die ein Ende der Hülse (1) bildet, wobei das Werkzeug (7) eine Form (8) aus mindestens zwei Teilen (81, 82) umfasst, die einen Formgebungshohlraum (9) begrenzt, der imstande ist, aus einer geöffneten Position in eine geschlossene Position zu wechseln und umgekehrt, durch relative Verlagerung der Teile (81, 82) der Form (8), und einen Kern (10), der mindestens teilweise in das Innere des Formgebungshohlraums (9) einsetzbar ist, wobei die Hülse (1) durch Füllen mit Hilfe eines Füllmaterials des zwischen dem Kern (10) und dem Inneren des Formgebungshohlraums (9) freigelassen Raums gebildet wird, wobei der Kern (10) aus mindestens zwei trennbaren Teilen (11, 15) besteht und einen als erster Teil (11) bezeichneten zylindrischen oder zylindrisch-konischen Teil umfasst, der außen mit einem Schraubengewinde (12) ausgestattet ist, das zu einem Schraubengewinde (13) der Form (8) komplementär ist, um zwischen den Schraubengewinden (12, 13) im mindestens teilweise eingesetzten Zustand des Kerns (10) in den Formgebungshohlraum (9) und geschlossenen Zustand des Formgebungshohlraums (9) einen ersten Formgebungsraum (14) des Balgteils (2) mit Schraubenwicklungen der Hülse (1) und einen zu einem Hohlteil (16) der Form (8) komplementären zweiten Teil (15) zu bilden, um zwischen dem zweiten Teil (15) des Kerns (10) und dem Hohlteil (16) der Form (8) im mindestens teilweise eingesetzten Zustand des Kerns (10) in den Formgebungshohlraum (9) der Form (8) und geschlossenen Zustand des Formgebungshohlraums einen zweiten Formgebungsraum (17) der Basis (3) der Hülse (1) zu bilden, **dadurch gekennzeichnet, dass** der zweite Teil (15) des Kerns (10) ein zweiter als beweglich bezeichneter Teil ist, der axial gemäß einer Richtung verlagerbar ist, die parallel zur Wickelachse (XX') der Gewindegänge des Schraubengewindes (12) des ersten Teils (11) des Kerns (10) in Richtung einer Beabstandung vom oder einer Annäherung an den ersten Teil (11) des Kerns (10) ist, im in den Formgebungshohlraum (9) eingesetzten Zustand des Kerns (10).

4. Werkzeug (7) nach vorangehendem Anspruch, **dadurch gekennzeichnet, dass** der erste und zweite Teil (11, 15) des Kerns (10) in aneinander angenäherter Position durch eine mit einer Rastrichtung gleitende Rastmontage aneinandergekoppelt sind, die sich parallel zur Wickelachse der (XX') Schraubengänge des Schraubengewindes (12) des ersten Teils (11) des Kerns (10) erstreckt.

5. Werkzeug (7) nach einem der Ansprüche 3 oder 4, **dadurch gekennzeichnet, dass** der Kern (10) in der Verlängerung des ersten Teils (11) des Kerns (10) an einem Ende der zylindrischen oder zylindrisch-konischen Form des ersten Teils (11) des Kerns (10) einen Wellenabschnitt (18) umfasst, auf den der zweite Teil (15) des Kerns (10) für eine gleitende Rastmontage zwischen dem ersten und zweiten Teil (11, 15) des Kerns (10) aufgesteckt ist.

6. Werkzeug (7) nach einem der Ansprüche 3 bis 5, **dadurch gekennzeichnet, dass** die Form (8) und der Kern (10) ausgelegt sind, um parallel zur Verlagerung der Teile (81, 82) der Form (8) zwischen einer geschlossenen Position und einer geöffneten Position des Formgebungshohlraums die Verlagerung des zweiten Teils (15) des Kerns (10) zwischen einer angenäherten Position an den ersten Teil (11) des Kerns (10) und einer beabstandeten Position vom ersten Teil (11) des Kerns (10) zu gestatten.

7. Werkzeug (7) nach Anspruch 6, **dadurch gekennzeichnet, dass** der Kern (10) einen dritten Teil (19) umfasst, der sich in der Verlängerung des zweiten Teils (15) erstreckt und in Verlagerung des zweiten Teils (15) mit dem zweiten Teil (15) fest verbunden ist, der sich zwischen dem ersten Teil (11) und dem dritten Teil (19) des Kerns (10) erstreckt, wobei dieser dritte Teil (19) zwei Arme (20) oder beziehungsweise Aufnahmen umfasst, die zwischen sich ein in Richtung des ersten Teils (11) des Kerns (10) offenes V bilden, wobei diese zwei Arme (20) oder beziehungsweise Aufnahmen imstande sind, mit Aufnahmen (21) oder beziehungsweise Armen in komplementärer Form zu den Teilen (81, 82) der Form (8) zusammenzuwirken, um parallel zur Verlagerung der Teile (81, 82) der Form (8) in Richtung einer Beabstandung, die dem Öffnen der Form (8) entspricht, eine axiale Verlagerung des zweiten Teils (15) des Kerns (10) in Richtung einer Beabstandung vom ersten Teil (11) des Kern (10) zu gewährleisten.

8. Werkzeug (7) nach einem der Ansprüche 3 bis 7, **dadurch gekennzeichnet, dass** es Antriebsmittel (22) zur relativen Rotationsverlagerung des ersten Teils (11) des Kerns (10) und der Hülse (1) um eine zur Wickelachse (XX') der Schraubengänge des Schraubengewindes (12) des ersten Teils (11) des Kerns (10) parallele Achse umfasst.

9. Werkzeug (7) nach einem der Ansprüche 3 bis 8, **dadurch gekennzeichnet, dass** es Mittel (23) zum Einspritzen eines Fluids unter Druck umfasst, wobei die Einspritzmittel (23) mindestens teilweise im Inneren des ersten Teils (11) des Kerns (10) untergebracht sind, wobei dieser erste Teil (11) des Kerns (10) in Form eines Hohlkörpers vorliegt.

10. Werkzeug (7) nach einem der Ansprüche 3 bis 9, **dadurch gekennzeichnet, dass** die Zone des zweiten Teils (15) des Kerns (10) mit komplementärer Form zum Hohlteil (16) der Form (8), um zwischen dem zweiten Teil (15) des Kerns (10) und dem Hohlteil (16) der Form (8) den zweiten Formgebungsraum (17) zu bilden, eine polylobäre Oberfläche (24) ist, die von kreisbogenförmigen Aussparungen (241) gebildet ist, die durch Segmente (242) mit kreisförmiger Oberfläche miteinander verbunden sind.

11. Werkzeug (7) nach einem der Ansprüche 3 bis 10, **dadurch gekennzeichnet, dass** der Kern (10) in der Verlängerung des ersten Teils (11) des Kerns (10) an einem Ende der zylindrischen oder zylindrisch-konischen Form des ersten Teils (11) des Kerns (10) gegenüber zu dem, das dem zweiten Teil (15) des Kerns (10) zugewandt positionierbar ist, einen zylindrischen Körper (25) mit komplementärer Form zu einem Hohlteil (27) der Form (8) umfasst, um zwischen dem zylindrischen Körper (25) des Kerns (10) und dem Hohlteil (27) der Form (8) im eingesetzten Zustand des Kerns (10) in den Formgebungshohlraum (9) der Form (8) und geschlossenen Zustand des Formgebungshohlraums (9) einen dritten Formgebungsraum eines Endes der Hülse (1) gegenüber der Basis (3) der Hülse (1) zu bilden.

12. Werkzeug (7) nach einem der Ansprüche 3 bis 11, **dadurch gekennzeichnet, dass** es Haltemittel (26) des Kerns (10) im mindestens teilweise in den Formgebungshohlraum (9) eingesetzten Zustand umfasst.

13. Kern (10), der imstande ist, mindestens teilweise in das Innere des Formgebungshohlraums (9) einer Form (8) aus mindestens zwei Teilen (81, 82) zwecks Erhalt eines Werkzeugs (7) nach einem der Ansprüche 3 bis 12 im Hinblick auf die Herstellung einer Hülse (1), auch als Schraubenbalg bezeichnet, einzudringen, umfassend einen zylindrischen oder zylindrisch-konischen geformten Hohlkörper, der mindestens einen verformbaren Balgteil (2) aufweist, der in der Verlängerung einer Basis (3) angeordnet ist, die ein Ende der Hülse (1) bildet, wobei die Hülse (1) durch Füllen des zwischen dem Kern (10) und dem Inneren des Formgebungshohlraums (9) im mindestens teilweise eingesetzten Zustand des Kerns (10) in den Formgebungshohlraum (9) und geschlossenen Zustands des Formgebungshohlraums (9) freigelassenen Raums mit einem Füllmaterial gebildet ist, wobei der Kern (10) aus mindestens zwei trennbaren Teilen besteht und einen als erster Teil (11) bezeichneten zylindrischen oder zylindrisch-konischen Teil umfasst, der außen mit einem Gewinde (12) ausgestattet ist, einen zweiten Teil (15) und in der Verlängerung des ersten Teils (11) des Kerns (10) an einem Ende der zylindrischen oder zylindrisch-konischen Form des ersten Teils (11) des Kerns (10) einen Wellenabschnitt (18), **dadurch gekennzeichnet, dass** das Gewinde (12) des ersten Teils (11) des Kerns (10) ein Schraubengewinde ist, dass der Wellenabschnitt (18), auf dem der zweite Teil (11) des Kerns (10) imstande ist, für eine gleitende Rastmontage zwischen dem ersten und zweiten Teil (11, 15) des Kerns (10) aufgesteckt zu werden, um eine axiale Verlagerung des zweiten Teils (15) des Kerns (10) gemäß einer Richtung zu erlauben, die zu der Wickelachse (XX') der Schraubengänge des Schraubengewindes (12) des ersten Teils (11) des Kerns (10) parallel ist, in Richtung einer Beabstandung oder einer Annäherung des ersten Teils (11) des Kerns (10) in Verlagerung mit dem ersten Teil (11) des Kerns (10) fest verbunden ist.

14. Kern (10) nach Anspruch 13,
**dadurch gekennzeichnet, dass** der Wellenabschnitt (18) und der erste Teil (11) des Kerns aus einem einzigen Stück hergestellt sind.

## Claims

1. An injection-molding method for manufacturing a sleeve (1), also called helical bellows, comprising a cylindrical or cylindroconical molded hollow body, including at least one deformable bellows portion (2) arranged in the extension of a base (3) forming one end of the sleeve (1), using a tooling (7) comprising a mold (8) formed by at least two parts (81, 82) delimiting a mold cavity (9) able to go from an open position to a closed position, and vice versa, by relative movement of said mold (8) parts (81, 82), and a core (10), able to be inserted at least partially inside the mold cavity (9), and comprising a cylindrical or cylindroconical portion (11) outwardly provided with a helical thread (12) complementary to a helical thread (13) of the mold (8) in order to form, between said helical threads (12, 13), in the closed state of said mold cavity (9), a first space (14) for molding the bellows portion (2) of the sleeve (1), the core (10) comprising, above the first cylindrical or cylindroconical portion (11) outwardly provided with a helical thread (12), a second so-called moving portion (15) complementary to a hollow portion (16) of the mold (8) in order to form, between said second portion (15) of the core (10) and the hollow portion (16) of the mold (8), in the closed state of said mold cavity (9), a second molding space (17) of the base (3) of the sleeve (1), said method comprising, in the at least partially state of the core (10) inserted into the mold cavity (9) and the closed state of the mold cavity (9), a step of filling the first and second mold spaces (14, 17) left free between the core (10) and the inside of the mold cavity (9) by injecting material therein, **characterized in that** said method further comprises a step for opening the mold (8) during or after which the second portion (15) of the core (10) is moved axially along a direction parallel to the winding axis (XX') of the threads of the helical screw thread (12) of the first portion (11) of the core (10) in the direction of a separation from the first portion (11) of the core (10), and a step for driving relative rotation of the sleeve (1) and of the first portion (11) of the core (10) in order to remove the sleeve (1) from the mold by unscrewing.

2. The injection-molding method for manufacturing a sleeve (1) according to claim 1, **characterized in that** said method comprises, before the step for driving relative rotation of the sleeve (1) and the first portion (11) of the core (10) in order to remove the sleeve (1) from the mold by unscrewing, a step for injecting a pressurized fluid between the first portion (11) of the core (10) and the sleeve (1).

3. A tooling (7) for the manufacture by injection molding of a sleeve (1), also called helical bellows, comprising a cylindrical or cylindroconical molded hollow body, including a deformable bellows portion (2) arranged in the extension of a base (3) forming one end of the sleeve (1), said tooling (7) comprising a mold (8) formed by at least two parts (81, 82) delimiting a mold cavity (9) able to go from an open position to a closed position, and vice versa, by relative movement of said mold parts (81, 82), and a core (10) able to be inserted at least partially inside the mold cavity (9), said sleeve (1) being formed by filling the space left free between the core (10) and the inside of the mold cavity (9) with a filler material, the core (10) being formed by at least two separable portions (11, 15) and comprising a portion called first cylindrical or cylindroconical portion (11) provided outwardly with a helical thread (12) complementary to a helical thread (13) of the mold (8) in order to form, between said helical threads (12, 13), in the state of the core (10) at least partially inserted into the mold cavity (9) and the closed state of the mold cavity, a first space (14) for molding the bellows portion with helical turns (2) of the sleeve (1), and a second portion (15) complementary to a hollow portion (16) of the mold (8) to form, between said second portion (15) of the core (10) and the hollow portion (16) of the mold (8), in the state of the core (10) at least partially inserted into the mold cavity (9) of the mold, and the closed state of the mold cavity, a second molding space (17) of the base (3) of the sleeve (1), **characterized in that** the second portion (15) of the core (10) is a so-called moving part movable axially along a direction parallel to the winding axis (XX') of the threads of the helical screw thread (12) of the first portion (11) of the core (10), in the direction moving further from or closer to the first portion (11) of the core (10), in the state of the core (10) inserted in the mold cavity (9).

4. The tooling (7) according to the preceding claim, **characterized in that** said first and second portions (11, 15) of the core (10) are, in the position close to one another, coupled to one another by a sliding interlocking assembly with an interlocking direction extending parallel to the winding axis (XX') of the threads of the helical screw thread (12) of the first portion (11) of the core (10).

5. The tooling (7) according to one of claims 3 or 4, **characterized in that** the core (10) comprises, in the extension of the first portion (11) of the core (10), at one end of the cylindrical or cylindroconical shape of said first portion (11) of the core (10), a shaft section (18) on which the second portion (15) of the core (10) is slipped for a sliding interlocking assembly between said first and second portions (11, 15) of the core (10).

6. The tooling (7) according to one of claims 3 to 5, **characterized in that** the mold (8) and the core (10) are configured to allow, in parallel with the movement of the parts (81, 82) of the mold (8) between a closed position and an open position of the mold cavity, the movement of the second portion (15) of the core (10) between a position close to the first portion (11) of the core (10) and a position far from the first portion (11) of the core (10).

7. The tooling (7) according to claim 6, **characterized in that** the core (10) comprises a third portion (19) extending in the extension of the second portion (15) and secured in movement with the second portion (15), with the second portion (15) extending between the first portion (11) and the third portion (19) of the core (10), this third portion (19) comprising two arms (20) or respectively housings forming a V between them which is open toward the first portion (11) of the core (10), these two arms (20) or housings, respectively, being able to cooperate with housings (21) or arms, respectively, of complementary shape of the parts (81, 82) of the mold (8) in order to ensure, in parallel with the movement of the parts (81, 82) of the mold (8) in the direction of a separation corresponding to the opening of the mold (8), an axial movement of the second portion (15) of the core (10) in the direction of a movement away from the first portion (11) of the core (10).

8. The tooling (7) according to one of claims 3 to 7, **characterized in that** it comprises means (22) for driving relative rotation of the first portion (11) of the core (10) and of the sleeve (1) about an axis parallel to the winding axis (XX') of the threads of the helical screw thread (12) of the first portion (11) of the core (10).

9. The tooling (7) according to one of claims 3 to 8, **characterized in that** it comprises means (23) for injecting a pressurized fluid, said injection means (23) being housed at least partially inside said first portion (11) of the core (10), this first portion (11) of the core (10) assuming the form of a hollow body.

10. The tooling (7) according to one of claims 3 to 9, **characterized in that** the zone of the second portion (15) of the core (10) having a shape complementary to the hollow portion (16) of the mold (8) in order to form the second molding space (17) between said second portion (15) of the core (10) and the hollow portion (16) of the mold (8) is a poly-lobed surface (24) formed by recesses (241) in a circular arc connected to one another by circular surface segments (242).

11. The tooling (7) according to one of claims 3 to 10, **characterized in that** the core (10) comprises, in the extension of the first portion (11) of the core (10), at one end of the cylindrical or cylindroconical shape of said first portion (11) of the core (10) opposite that which can be positioned opposite the second portion (15) of the core (10), a cylindrical body (25) having a shape complementary to a hollow portion (27) of the mold (8) in order to form, between said cylindrical body (25) of the core (10) and the hollow portion (27) of the mold (8), in the state of the core (10) inserted into the mold cavity (9) of the mold (8) and the closed state of the mold cavity (9), a third space (28) for molding one end of the sleeve (1) opposite the base (3) of the sleeve (1).

12. The tooling (7) according to one of claims 3 to 11, **characterized in that** it comprises means (26) for keeping the core (10) in the state at least partially inserted into the molding cavity (9).

13. A core (10) able to be inserted at least partially inside the mold cavity (9) of a mold (8) formed by at least two parts (81, 82) in order to obtain a tooling (7) according to one of claims 3 to 12 so as to manufacture a sleeve (1), also called helical bellows, comprising a cylindrical or cylindroconical molded hollow body including a deformable bellows portion (2) arranged in the extension of a base (3) forming one end of the sleeve (1), said sleeve (1) being formed by filling the space left free between the core (10) and the inside of the mold cavity (9) using a filler material, in the state of the core (10) inserted at least partially into the mold cavity (9) and the closed state of the mold cavity (9), said core (10) being formed by at least two separable portions and comprising a portion called first cylindrical or cylindroconical portion (11) provided outwardly with a thread (12), a second portion (15) and, in the extension of the first portion (11) of the core (10) at one end of the cylindrical or cylindroconical shape of said first portion (11) of the core (10), a shaft section (18), **characterized in that** the thread (12) of the first portion (11) of the core (10) is a helical thread, **in that** the shaft section (18) on which the second portion (11) of the core (10) is able to be slipped for a sliding interlocking assembly between said first and second portions (11, 15) of the core (10) to allow an axial movement of the second portion (15) of the core (10) along a direction parallel to the winding axis (XX') of the threads of the helical screw thread (12) of the first portion (11) of the core (10), in the direction moving further from or closer to the first portion (11) of the core (10), is secured in movement with the first portion (11) of the core (10).

14. The core (10) according to claim 13, **characterized in that** the shaft section (18) and the first portion (11) of the core are made in a single piece.
